# EUROPÄISCHE PATENTSCHRIFT

(11) **EP 1 396 770 B1**
(45) Veröffentlichungstag und Bekanntmachung des Hinweises auf die Patenterteilung: **04.07.2007**
(21) Anmeldenummer: 02018426.3
(22) Anmeldetag: 16.08.2002
(51) Int. Cl.: G05B 13/02

(54) **Verfahren zur Regelung eines thermodynamischen Prozesses**
Method of regulating a thermodynamic process
Méthode pour commander un procédé thermodynamique

(43) Veröffentlichungstag der Anmeldung: 10.03.2004
(73) Patentinhaber: Powitec Intelligent Technologies GmbH, 45219 Essen (DE)
(72) Erfinder: Wintrich, Franz, 45309 Essen (DE); Stephan, Volker, 99976 Hüpstedt (DE); Tiedtke, Dirk, 45886 Gelsenkirchen (DE)
(74) Vertreter: Patentanwälte Hosenthien-Held und Dr. Held

(56) Entgegenhaltungen:
- EP-A- 0 609 999
- US-A- 5 259 064
- US-A- 5 943 660
- US-A- 5 971 747
- US-A- 6 000 827
- PATENT ABSTRACTS OF JAPAN vol. 1996, no. 07, 31. Juli 1996 (1996-07-31) & JP 08 063203 A (HITACHI LTD), 8. März 1996 (1996-03-08)

## Beschreibung

Die Erfindung betrifft ein Verfahren zur Regelung eines thermodynamischen Prozesses, bei dem Prozessgrößen im System gemessen, in einem neuronalen Netz anhand eines trainierten, aktuellen Prozessmodells Vorhersagen berechnet, mit Optimierungszielen verglichen und zur Regelung des Prozesses geeignete Aktionen im System durchgeführt werden.

Bei einem bekannten Verfahren dieser Art werden schlecht oder teuer messbare Prozessgrößen mittels des Prozessmodells im neuronalen Netz vorhergesagt. Um Änderungen des Prozesses folgen zu können, werden zyklisch drei Schritte durchgeführt, nämlich eine Prozessanalyse zur Auffindung eines Ansatzes für das Prozessmodell, ein Training des neuronalen Netzes und die Anwendung des Prozessmodells zur Vorhersage. Dieses Vorgehen ist zeit- und personalaufwendig.

In der US 5,259,064 A wird ein Verfahren beschrieben, bei dem entweder ein für Vorhersagen benutztes neuronales Netz laufend trainiert wird oder von zwei neuronalen Netzen gleicher Struktur eines für Vorhersagen und eines zum Trainieren benutzt wird.

Die US 5,943,660 A zeigt ein Verfahren, bei welchem - ausgehend von einem aktuellen Zustand zur Erreichen eines Optimierungsziels ein linearisierter Ansatz für eine Stellaktion verwendet wird, wobei die beiden Linearisierungs-Koeffizienten hierfür aus je einem neuronalen Netz ermittelt werden.

In der EP 0 609 999 A1 ist ein Verfahren beschrieben, bei dem zum einen für die aktuellen Prozessgrößen im System mittels eines ersten neuronalen Netzes die Steuersignale für die zur Erreichen notwendigen Aktionen ermittelt werden und zum einen für die gewünschten, gegebenenfalls laufend korrigierten Prozessgrößen im System mittels eines zweiten neuronalen Netzes, welches mit dem ersten neuronalen Netz übereinstimmt, die Steuersignale für die zur Erreichen notwendigen Aktionen ermittelt werden. Die Differenz der beiden Steuersignale wird durch einen Regelkreis reduziert, bis die gewünschten Prozessgrößen auch die aktuelle Prozessgrößen sind.

Der vorliegenden Erfindung liegt die Aufgabe zugrunde, ein Verfahren der eingangs genannten Art zu verbessern. Diese Aufgabe wird durch ein Verfahren mit den Merkmalen des Anspruches 1 gelöst. Weitere vorteilhafte Ausgestaltungen sind Gegenstand der Unteransprüche.

Dadurch, dass zeitlich parallel zum normalen Regelungsbetrieb der Prozess automatisch analysiert, wenigstens ein neues Prozessmodell gebildet, trainiert und bezüglich der Vorhersagen mit dem aktuellen Prozessmodell verglichen wird, kann eine Modelladaption an einen geänderten Prozess ohne erhöhten Personalaufwand erreicht werden. Durch mehrere neue Prozessmodelle mit unterschiedlichen Topologien des neuronalen Netzes und beispielsweise unterschiedlicher Trainingszyklenanzahl kann eine Adaption auch an große Änderungen des Prozesses erreicht werden. Diese vollständig automatische Modelladaption läuft vorzugsweise im Hintergrund ab, d.h. als sogenannter Batch-Job auf der Datenverarbeitungsanlage, so dass auch der Zeitaufwand nicht höher ist.

Im folgenden ist die Erfindung anhand eines Ausführungsbeispiels näher erläutert.

In einem Zementofen läuft als beispielhafter thermodynamischer Prozeß ein Brennprozeß ab, welcher so geregelt werden soll, daß er einerseits eine gewisse Stabilität und andererseits eine gewisse Plastizität aufweist, d.h. sich den Gegebenheiten anpaßt, wobei gewisse Optimierungsziele bestehen. Der Zustand im Zementofen wird beschrieben durch verschiedene Prozeßgrößen, wie beispielsweise Kalkmassenstrom, Luftmassenstrom oder dergleichen, von denen manche zugleich Stellgrößen bilden. Durch Aktionen, d.h. Änderungen von Stellgrößen, wird der Zustand im Zementofen geändert. Für eine online-Überwachung und -Regelung und Vorhersagen über künftige Zustände des Zementofens ist auf einer Datenverarbeitungsanlage ein neuronales Netz implementiert, welches ein Prozeßmodell definiert, welches die Änderung des Zustandes als Reaktion auf Aktionen angibt und unabhängig von den Optimierungszielen ist. Mit einer Gütefunktion wird eine Situationsbewertung vorgenommen, welche einen bestimmten, aktuellen Zustand unter Berücksichtigung der Optimierungsziele bewertet.

Um bestimmte Prozeßgrößen vorhersagen zu können, beispielsweise den FCaO-Wert (Klinkerzahl) zur Definition der Qualität des Zements, wird bei einem bekannten Verfahren zuerst eine Prozeßanalyse durchgeführt, um eine Funktion zur Bestimmung der gewünschten Prozeßgröße zu identifizieren, dann ein Training des neuronalen Netzes mit dem auf den gewonnenen Daten beruhenden Prozeßmodell vorgenommen und schließlich das neuronale Netz angewendet.

Erfindungsgemäß wird hingegen im Hintergrund vollautomatisch eine Modelladaption vorgenommen. Hierzu wird zunächst eine automatische Prozeßanalyse durchgeführt, welche mittels - vorzugsweise verschiedener - Verfahren zur Prozeßidentifikation in definierten Zeittakten eine Liste aller relevanter Prozeßgrößen liefert.

Auf dieser Basis werden dann in einer automatischen Modellbildung verschiedene Typen von neuronalen Netzen mit verschiedenen Parameterkonstellationen, wie Lernraten und Trainingszyklen, Schichtenanzahl, Schichtengröße und andere Topologieaspekte, Parameter der Datenverarbeitung (Tiefpaßfiltergrößen o.ä.) trainiert und auf der jeweils verfügbaren Datenbasis verifiziert. Die Suche nach geeigneten Netzwerkparametern kann in dem - hochdimensionalen - Parameterraum durch geeignete Optimierungsverfahren und Suchstrategien (z.B. evolutionäre Verfahren) realisiert werden.

Wenn durch die Analyse und Modellbildung ein Prozeßmodell gefunden wird, welches besser, d.h. genauer, als das aktuell eingesetzte Modell arbeitet, so wird dieses neue Prozeßmodell von nun an eingesetzt.

Durch diese Modelladaption erfolgt eine automatische Anpassung an sich ändernde Prozeßeigenschaften der jeweiligen Anlage einschließlich größerer Eingriffe, wie Revisionen oder Umbauten, so daß ein adäquates Prozeßmodell garantiert ist. Auch bisher unberücksichtigte Prozeßgrößen werden im Bedarfsfall in die Modellbildung einbezogen.

## Patentansprüche

1. Verfahren zur Regelung eines thermodynamischen Prozesses, bei dem Prozessgrößen im System gemessen, in einem neuronalen Netz anhand eines trainierten, aktuellen Prozessmodells Vorhersagen berechnet, mit Optimierungszielen verglichen und zur Regelung des Prozesses geeignete Aktionen im System durchgeführt werden, wobei zeitlich parallel zum normalen Regelungsbetrieb der Prozess automatisch analysiert, aus den ermittelten, modellrelevanten Prozessgrößen mehrere neue Prozessmodelle für neuronale Netze mit unterschiedlicher Topologie gebildet, die verschiedenen Typen von neuronalen Netzen trainiert und bezüglich der Vorhersagen mit dem aktuellen Prozessmodell verglichen werden und im Falle höherer Genauigkeit der Vorhersagen eines der neuen Prozessmodelle das aktuelle Prozessmodell durch das neue Prozessmodell ersetzt wird.

2. Verfahren nach Anspruch 1, **dadurch gekennzeichnet, dass** die Analyse des Prozesses, die Bildung der neuen Prozessmodelle, das Training und der Vergleich mit dem aktuellen Prozessmodell im Hintergrund abläuft.

3. Verfahren nach einem der vorhergehenden Ansprüche, **dadurch gekennzeichnet, dass** die automatische Analyse des Prozesses in einem definierten Zeittakt erfolgt.

4. Verfahren nach einem der vorhergehenden Ansprüche, **dadurch gekennzeichnet, dass** die modellrelevanten Prozessgrößen mittels Optimierungsverfahren und Suchstrategien ermittelt werden.

5. Verfahren nach einem der vorhergehenden Ansprüche, **dadurch gekennzeichnet, dass** die neuen Prozessmodelle für neuronale Netze mit unterschiedlichen Datenverarbeitungsparametern und/oder unterschiedlichem Training gebildet werden.

6. Vorrichtung, welche ein Verfahrens nach einem der vorhergehenden Ansprüche durchführt, mit Sensoren zur Messung der Prozessgrößen im System, einer Datenverarbeitungsanlage, auf welcher ein neuronales Netz mit einem Prozessmodell implementiert ist, und einer Rückkopplung auf das System zur Durchführung von Aktionen.

## Claims

1. Method for regulating a thermodynamic process, in which process variables in the system are measured, predictions are calculated in a neural network on the basis of a trained, current process model, compared with optimisation objectives and actions suitable for regulating the process are carried out in the system, with the process being automatically analysed at the same time as normal regulation operation, a plurality of new process models for neural networks having different topologies being formed from the established model-relevant process variables, the various types of neural network being trained and compared with the current process model with respect to the predictions and, in the event of the predictions of one of the new process models being more accurate, the current process model being replaced by the new process model.

2. Method according to claim 1, **characterised in that** the analysis of the process, the formation of the new process models, the training and the comparison with the current process model are carried out in the background.

3. Method according to either of the preceding claims, **characterised in that** the automatic analysis of the process is carried out in a defined time cycle.

4. Method according to any one of the preceding claims, **characterised in that** the model-relevant process variables are established by means of optimisation methods and search strategies.

5. Method according to any one of the preceding claims, **characterised in that** the new process models for neural networks are formed so as to have different data processing parameters and/or different training.

6. Device which carries out a method according to any one of the preceding claims, having sensors for measuring the process variables in the system, a data processing arrangement on which a neural network is implemented with a process model, and feedback to the system for carrying out actions.

## Revendications

1. - Procédé de régulation d'un processus thermodynamique, suivant lequel des grandeurs de processus dans le système sont mesurées, des prédictions sont calculées dans un réseau neuronal au moyen d'un modèle de processus actuel, entraîné, comparées avec des objectifs d'optimisation et des actions appropriées pour la régulation du processus dans le système sont réalisées, à l'occasion de quoi dans le temps, parallèlement au fonctionnement de régulation normal, le processus est analysé automatiquement à partir des grandeurs de processus pertinentes pour le modèle, détectées, plusieurs nouveaux modèles de processus pour des réseaux neuronaux avec une topologie différente sont formés, les différents types de réseaux neuronaux sont entraînés et comparés en ce qui concerne les prédictions avec le modèle de processus actuel, et, dans le cas d'une plus grande précision des prédictions de l'un des nouveaux modèles de processus, le modèle de processus actuel est remplacé par le nouveau modèle de processus.

2. - Procédé selon la revendication 1, **caractérisé par le fait que** l'analyse du processus, la formation des nouveaux modèles de processus, l'apprentissage et la comparaison avec le modèle de processus actuel se déroulent en fond.

3. - Procédé selon l'une quelconque des revendications précédentes, **caractérisé par le fait que** l'analyse automatique du processus a lieu dans une période de temps définie.

4. - Procédé selon l'une des revendications précédentes, **caractérisé par le fait que** les grandeurs de processus pertinentes pour le modèle sont détectées au moyen de procédés d'optimisation et de stratégies de recherche.

5. - Procédé selon l'une des revendications précédentes, **caractérisé par le fait que** les nouveaux modèles de processus pour des réseaux neuronaux sont formés avec des paramètres de traitement de données différents et/ou un apprentissage différent.

6. - Dispositif, lequel met en oeuvre un procédé tel que défini à l'une des revendications précédentes, avec des détecteurs pour la mesure des grandeurs de processus dans le système, un dispositif de traitement des données, sur lequel est implémenté un réseau neuronal avec un modèle de processus, et une rétroaction sur le système pour la réalisation d'actions.
